# EUROPEAN PATENT APPLICATION

(11) **EP 1 883 210 A2**
(43) Date of publication of application: **30.01.2008**
(21) Application number: 07110466.5
(22) Date of filing: 18.06.2007
(51) Int. Cl.: H04M 1/247, H04M 1/2745

(54) **Method and device for performing integration search in mobile communication terminal**

(30) Priority: 24.07.2006 KR 20060069115
(71) Applicant: Samsung Electronics Co., Ltd., Suwon-si Gyeonggi-do (KR)
(72) Inventor: Kim, Young Mi, Gyeonggi-do (KR); Hwang, Byeong Cheol, Gyeonggi-do (KR); Jeon, Jin Young, Gyeonggi-do (KR); Jeong, Seok Hyun, Gyeonggi-do (KR); Chang, Min Young, Gyeonggi-do (KR)
(74) Representative: Grünecker, Kinkeldey, Stockmair & Schwanhäusser Anwaltssozietät

(57) **Abstract**

A device and method for easily searching for various stored information on a screen of a mobile communication terminal in a standby state are provided. The integration search device of a mobile communication terminal includes an input unit having a plurality of keys to which characters and numerals are allocated; a storage unit for storing character and numeral mapping information corresponding to the keys, basic information, and edition information; a search unit for searching for a character and numeral allocated to an input key in response to an input of one of the keys and searching for previously stored basic information and edition information corresponding to a found character and numeral; a controller for sorting a search result; and a display unit for displaying the sorted search result in a list format. Therefore, a user can easily search for or execute desired information on a screen by performing an integration search through inputting a numeric key in a standby state of a mobile communication terminal.

## Description

### BACKGROUND OF THE INVENTION

### 1. Field of the Invention

The present invention relates to a device and method for performing a search in a mobile communication terminal, and more particularly, to a device and method for easily searching for various stored information on a screen of a mobile communication terminal in a standby state.

### 2. Description of the Related Art

Nowadays, as mobile communication terminals are widely used, many people communicate using mobile communication terminals while moving. A user usually remembers a phone number to perform communication in a standby state of the mobile communication terminal and inputs the phone number to the mobile communication terminal. However, the quantity of phone numbers that can be remembered by the user is limited, and most mobile communication terminals have a phone book in which phone numbers are stored as a means for assisting the user's limited memory. However, in order to perform communication using the phone book, complicated steps must be performed, including selecting a menu of the phone book by inputting a menu key, selecting a phone number search menu of the phone book, inputting a search word on a phone number search screen, and inputting a phone number search key (for example, a confirmation key).

However, when a phone number of another party to perform communication is stored as an abbreviated number, the user can easily perform communication using the abbreviated number. However the user must memorize the abbreviated number.

Further, recently released mobile communication terminals have a function of storing various information (for example, a schedule, a memo, an alarm, and phone numbers) as well as a communication function. Accordingly, a menu configuration of the mobile communication terminal becomes complex, whereby much time and effort is required to search for a menu.

### SUMMARY OF THE INVENTION

The present invention has been made in an effort to solve the above problems, and the present invention provides a device and method for performing an integration search on a screen of a mobile communication terminal in a standby state.

In accordance with an aspect of the present invention, an integration search device of a mobile communication terminal includes an input unit having a plurality of keys to which characters and numerals are allocated; a storage unit for storing character and numeral mapping information corresponding to the keys, basic information, and edition information; a search unit for searching for a character and numeral allocated to an input key in response to an input of one of the keys and searching for previously stored basic information and edition information corresponding to a found character and numeral; a controller for sorting a search result; and a display unit for displaying the sorted search result in a list format.

In accordance with another aspect of the present invention, a method of performing an integration search in a mobile communication terminal having a plurality of keys to which characters and numerals are mapped includes searching for a character and numeral allocated to an input key in response to an input of one of the keys; displaying the character and numeral allocated to the key according to a search result; searching for previously stored basic information and edition information corresponding to the displayed character and numeral; and displaying the previously stored basic information and edition information.

### BRIEF DESCRIPTION OF THE DRAWINGS

The objects, features and advantages of the present invention will be more apparent from the following detailed description in conjunction with the accompanying drawings, in which:
FIG. 1 is a block diagram illustrating a configuration of a mobile communication terminal having an integration search device according to an exemplary embodiment of the present invention;
FIG. 2 is a view illustrating a keypad of a mobile communication terminal according to an exemplary embodiment of the present invention;
FIGS. 3A and 3B are diagrams illustrating a database for managing information generated by editing from a user;
FIG. 4 is a table illustrating a menu configuration of a mobile communication terminal according to an exemplary embodiment of the present invention;
FIG. 5 is a flowchart illustrating an integration search method according to an exemplary embodiment of the present invention;
FIGS. 6A and 6B are flowcharts illustrating in detail processes of the integration search method shown in FIG. 5;
FIGS. 7a to 7f are diagrams illustrating a screen of a search process according to an exemplary embodiment of the present invention; and
FIGS. 8a to 8g are diagrams illustrating a screen of a search process according to an exemplary embodiment of the present invention.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

According to the present invention, a user can easily search for desired information on a screen by performing an integration search through inputting a numeric key in a standby state of a mobile communication terminal.

In exemplary embodiments of the present invention, a method of inputting alphabet characters uses an automatic word completion function.

The automatic word completion function is a method of displaying an actually existing character row among words that can combine with a character allocated to an input key in a list format in an order of a used number of times by searching a dictionary. For example, when a user inputs a word 'pizza' in a keypad in which characters 'a', 'b', and 'c' are allocated to a numeric key '1', characters 'g', 'h', and 'i' are allocated to a numeric key '4', characters 'p', 'q', 'r', and 's' are allocated to a numeric key '7', and characters 'w', 'x', 'y', 'z' are allocated to a numeric key '9', the word 'pizza' is displayed by inputting '74991'.

In exemplary embodiments of the present invention, input using an English alphabet is described, and examples of input using Korean alphabet are also described herein. However, the present invention is not limited to use of the English and Korean alphabets, and other alphabets may be used in other exemplary embodiments.

In the present invention, an integration search request signal is a signal for searching all information stored in a mobile communication terminal, a specific menu search request signal is a signal for searching for information corresponding to a specific menu selected by a user among information stored in the mobile communication terminal, and a specific item selection signal is a signal for positioning a cursor at a specific item.

Basic information in exemplary embodiments of the present invention is organized in a menu configuration programmed during manufacture of the mobile communication terminal. For example, the basic information includes menus such as a phone book, multimail, camera, and organizer. **[PLEASE NOTE, WE SUGGEST CHANGING "MULTIMAIL" TO "MESSAGES" THROUGHOUT THIS APPLICATION. PLEASE ADVISE.]**

Further, in exemplary embodiments of the present invention, edition information is information that is edited and stored by the user in the mobile communication terminal. For example, the edition information includes information (for example, names, phone numbers, abbreviated numbers, and pictures) of other parties stored in the phone book, transmission or reception character messages, E-mail, or voice messages stored in a multimail menu, images or video files stored in a camera menu, an audio file, and a schedule and alarm stored in an organizer menu.

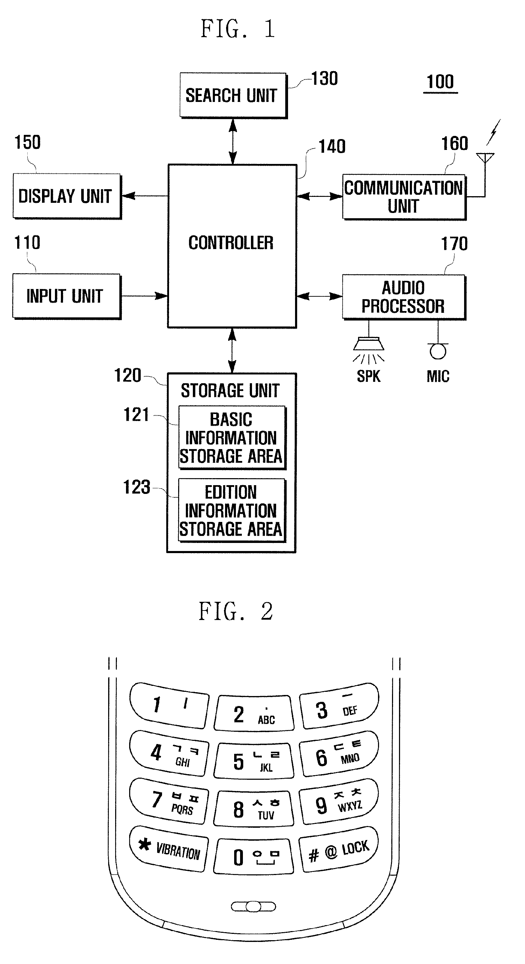

FIG. 1 is a block diagram illustrating a configuration of a mobile communication terminal having an integration search device according to an exemplary embodiment of the present invention. FIG. 2 is a view illustrating a keypad of a mobile communication terminal according to an exemplary embodiment of the present invention.

Referring to FIGS. 1 and 2, the mobile communication terminal 100 includes an input unit 110, storage unit 120, search unit 130, controller 140, display unit 150, communication unit 160, and audio processor 170.

The input unit 110 receives information selected by a user and may be a keypad, a touch pad, and a touch screen.

The input unit 110 further includes a plurality of numeric keys, a menu key, and a function key for performing various functions, and outputs key data to the controller 140 by user manipulation from the outside of the mobile communication terminal 100. Particularly, the input unit 110 includes a plurality of keys to which characters and numerals are allocated. For example, as shown in FIG. 2, English alphabet characters 'M', 'N', and 'O' and Korean alphabet characters '⊏' and '∊' are allocated to a numeric key '6'.

When the allocated alphabet character is input to a key, it is preferable to use an automatic word completion function.

The storage unit 120 includes a program memory for storing programs required for controlling operation and state of the mobile communication terminal 100 and for controlling the controller 130, and a data memory for storing data. The data memory is a flash memory or another non-volatile memory. Particularly, the storage unit 120 stores mapping information of characters and numerals corresponding to keys. For example, the numeric key '6' stores information mapped to the English alphabet characters 'M', 'N', and 'O' and the Korean alphabet characters '⊏' and '∊'.

Further, the storage unit 120 stores information to which a search menu (for example, a phone number, character message, file, and memo) for searching for each menu is mapped, in a direction key. It is preferable that mapping between the search menu and the direction key is performed in a manufacturing process of the mobile communication terminal 100. The mapping between the search menu and the direction key can be performed based on a user's selection information.

The storage unit 120 further includes a basic information storage area 121 and an edition information storage area 123.

The basic information storage area 121 stores basic information, which is a constituent element of a menu of the mobile communication terminal 100, and the edition information storage area 123 stores edition information edited by the user.

The search unit 130 searches in the storage unit 120 for a character and numeral allocated to an input key in response to an input of the key by the input unit 110, and searches for previously stored basic information and edition information corresponding to the found character or numeral.

For example, the search unit 130 searches for a menu in which at least one character allocated to the input key is included in a menu name. When a character allocated to a previously input key exists, it is preferable to search for a menu in which a character row generated by a sequential combination of the character allocated to a previously input key and a character allocated to the newly input key is included in a menu name. When at least one menu is found, the search unit 130 preferentially searches for a frequently used menu. The search unit 130 searches for a menu in which a character allocated to the input key is the first character of a menu name. The character includes an English alphabet character and a Korean alphabet character. When the character is an English alphabet character, it is preferable to use an automatic word completion function.

Further, the search unit 130 searches for edition information including a sequential combination of the characters allocated to the input keys stored in the storage unit 120 in response to an integration search request signal. The integration search request signal is preferably an input signal from a 'confirmation key' . Particularly, the search unit 130 searches for at least one menu among the edition information stored in the storage unit 120.

Further, the search unit 130 searches for edition information corresponding to a specific menu among the edition information including a sequential combination of the characters allocated to the input keys stored in the storage unit 120 in response to a specific menu search request signal. The specific menu search request signal is preferably a direction key input signal mapped to a specific menu search.

The controller 140 controls the general state and operation of the mobile communication terminal 100, and includes a microprocessor or a Digital Signal Processor (DSP). Particularly, the controller 140 sorts a search result of the search unit 130. The controller 140 sorts the search result, when characters are English alphabet characters, in an English alphabetic order, and sorts the search result, when characters are Korean alphabet characters, in a Korean consonant order. It is preferable that the controller 140 divides and sorts, when an integration search is performed, the found edition information according to the menu.

Further, the controller 140 executes the selected item in response to confirmation of a specific item selection signal input by the input unit 110. For example, the specific item selection signal is input by a 'down arrow key' of the direction key. Specifically, the controller 140 executes, after a specific item is selected by an input of the 'down arrow key', the corresponding item by an input of a 'confirmation key'.

For example, the controller 140 selects a 'CALCULATOR' function from the search result in response to the direction key input by the input unit 110 and executes the 'CALCULATOR' function in response to the 'confirmation key' input signal.

The display unit 150 displays a state and operation process of the mobile communication terminal 100. Particularly, the display unit 150 displays a search result sorted by the control of the controller 140 in a list format. The display unit 150 displays the search result sorted by the controller 140 on a pop-up window.

The communication unit 160 is a transmission and reception circuit for transmitting and receiving voice signals and control information to and from a base station by wireless communication. The communication unit 160 performs a function of receiving a call signal transmitted by a sender's mobile communication terminal through an antenna and outputting the received call signal to the controller 140, or transmitting data stored in the storage unit 120 to a receiver's mobile communication terminal through the antenna. Particularly, the communication unit 160 performs, when a key is input for an extended period and an abbreviated number mapped to the key is stored, communication with the abbreviated number.

Further, if a communication key inputs a phone number to which a cursor points, by the selection of the user from the search result sorted by the controller 140, the communication unit 160 performs communication with the phone number.

The audio processor 170 processes a voice signal input by the user through a MICrophone (MIC) for transmission through the communication unit 160, and processes another party's voice signal received through the communication unit 160 or various audio signals generated in the controller 140 and outputs the signals through a SPeaKer (SPK).

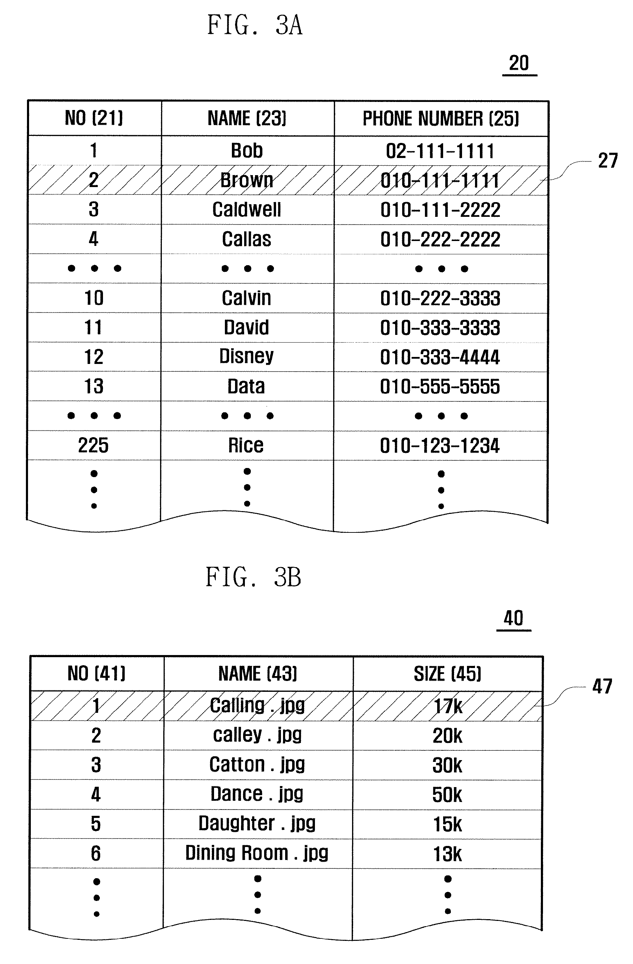

FIGS. 3A and 3B are diagrams illustrating a database for managing information generated by user editing. Referring to FIG. 3A, a phone number management database 20 includes an identification number 21 field, name 23 field, and phone number 25 field.

For example, in the phone number management database 20, mapping information 27 having the identification number 21 '2', the name 23 'Brown', and the phone number 25 '010-111-1111' is stored.

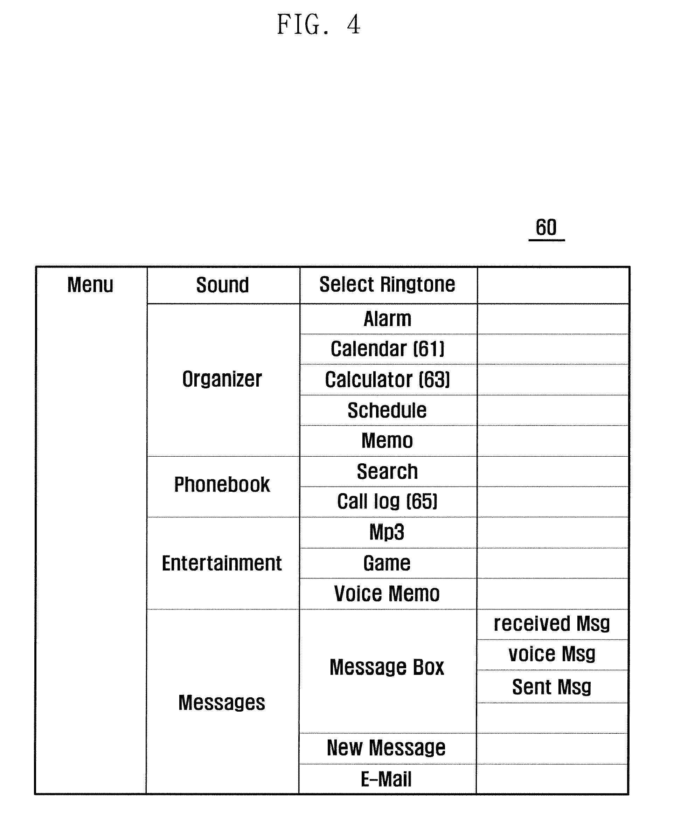

FIG. 4 is a table illustrating a menu configuration of a mobile communication terminal according to an exemplary embodiment of the present invention.

Referring to FIG. 4, the menu table 60 stores at least one menu for composing a menu. For example, the menu table 60 stores a 'CALENDAR' 61, 'CALCULATOR' 63, and 'CALL LOG' 65. **[PLEASE CORRECT SPELLING OF "ALARM" AND "CALENDAR" IN FIG. 4.]**

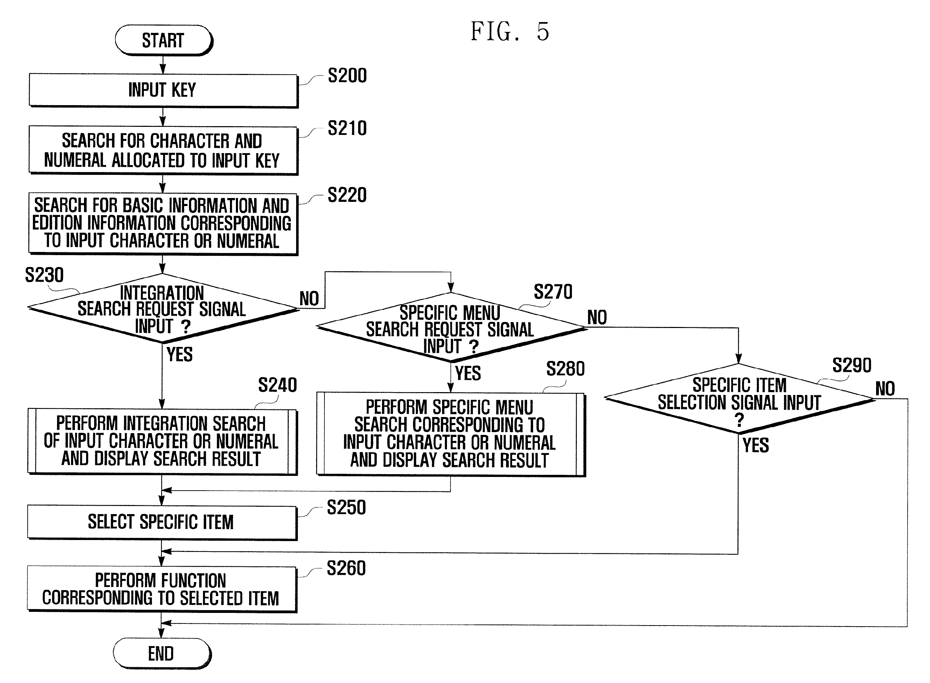

FIG. 5 is a flowchart illustrating an integration search method according to an exemplary embodiment of the present invention.

Referring to FIGS. 1 to 5, when a key in the input unit 110 is input, in step S200, the controller 140 controls the search unit 130 to search for a character and numeral allocated to the input key in response to the input of the key, in step S210.

The controller 140 searches for basic information and edition information stored in the storage unit 120 corresponding to a character or numeral allocated to the input key and displays a search result in the display unit 150, in step S220. It is preferable to search for an abbreviated number of a phone number stored in a phone book among the edition information at step S220.

Further, the controller 140 controls the search unit 130 to search for a menu in which a character allocated to the key input through the input unit 110 is included in a menu name. When a character allocated to a previously input key exists, it is preferable to search for a menu in which a character row generated by a sequential combination of the character allocated to a previously input key and a character allocated to the newly input key is included in a menu name. When at least one menu is found, the search unit 130 preferentially searches for a frequently used menu.

The search unit 130 searches for a menu in which a character allocated to the input key is the first character of a menu name. The character includes an English alphabet character and a Korean alphabet character. When the character is an English alphabet character, it is preferable to use an automatic word completion function.

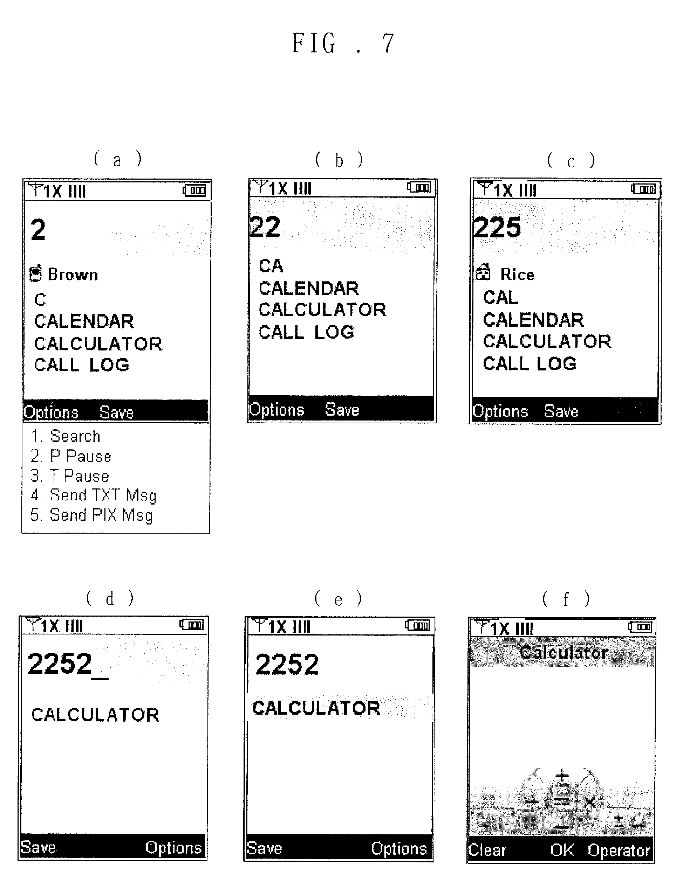

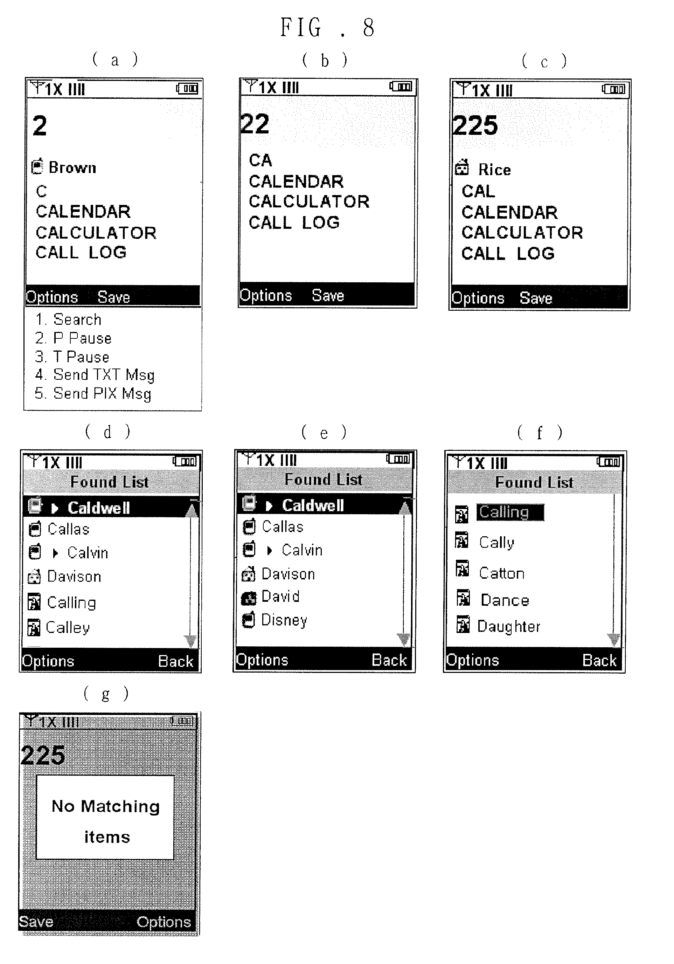

FIGS. 7a to 7f and FIGS. 8a to 8g are diagrams illustrating a screen of a search process according to exemplary embodiments of the present invention.

In an example shown in FIGS. 7a and 8a, the controller 140 controls the search unit 130 to display, if a numeric key '2' is input, the most frequently used character 'C' among the alphabet characters 'A', 'B' and 'C' allocated to the numeric key '2' on the screen. The controller 140 controls the search unit 130 to search for basic information and edition information, thereby finding 'Brown', which corresponds to an abbreviated number '2', and menus 'CALENDAR' 61, 'CALCULATOR' 63, and 'CALL LOG' 65 beginning with the character 'C', and to display them in a list format. The search process is performed by searching for the phone number management database 20 and the menu table 60.

If the numeric key '2' is then input, the controller 140 controls the search unit 130 to search for menus having characters 'A', 'B' or 'C' combined as a next character with the first character 'C', and to search for basic information and edition information, thereby finding 'no information' corresponding to an abbreviated number '22' and menus 'CALENDAR', 'CALCULATOR', and 'CALL LOG' beginning with a character row 'CA', then to display them in a list format, as shown in FIGS. 7b and 8b. If a numeric key '5' is then input, the controller 140 controls the search unit 130 to search for menus having characters 'J', 'K' or 'L' combined as a next character with the character row 'CA', and to search for basic information and edition information, thereby finding a word 'RICE' corresponding to an abbreviated number '225' and menus 'CALENDAR', 'CALCULATOR', and 'CALL LOG' beginning with a character row 'CAL', then to display them in a list format, as shown in FIGS. 7c and 8c.

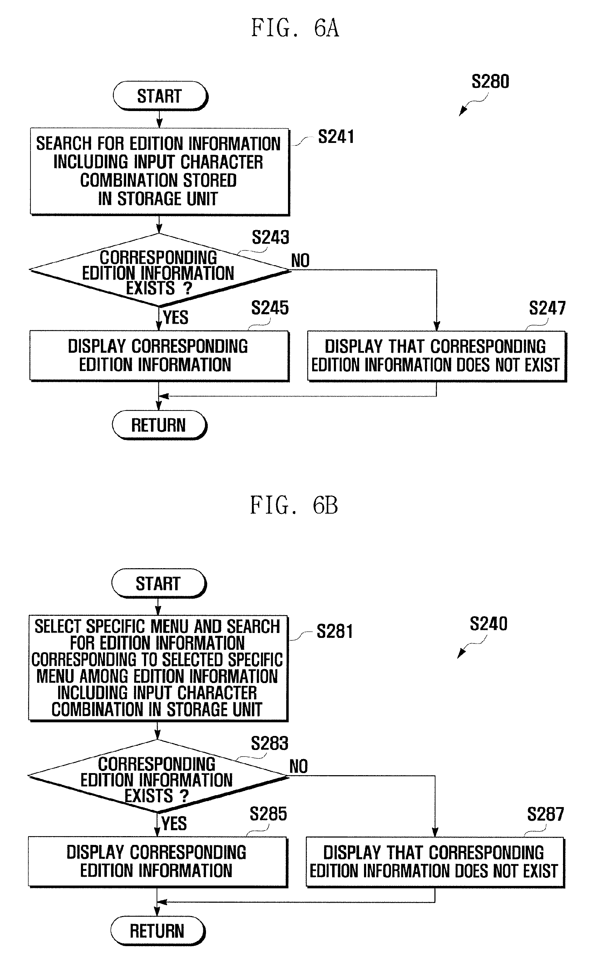

Thereafter, the controller 140 determines whether an integration search request signal is input, in step S230. The integration search request signal is preferably a 'confirmation key' input signal. If an integration search request signal is input, the controller 140 controls the search unit 130 to perform an integration search of a character or numeral allocated to the input key and to display the search result, in step S240. The process in step S240 is described in detail later with reference to FIG. 6A.

The controller 140 selects a specific item according to the user's selection information in the displayed search result, in step S250, and when an execution signal of the selected item is input, the controller 140 performs a function corresponding to the selected item in response to the input execution signal, in step S260. In this case, it is preferable to use a direction key (for example, an up or down arrow key) to select a specific item and to input a 'confirmation key' for executing the selected item.

If an integration search request signal is not input at step S230, the controller 140 determines whether a specific menu search request signal is input, in step S270. If a specific menu search request signal is input, the controller 140 selects a specific menu according to user input and controls the search unit 130 to perform a specific menu search corresponding to a character or numeral allocated to the input key and to display the search result, in step S280. The specific menu search request is input by a direction key to which a specific search menu is mapped. The process in step S280 is described in detail later with reference to FIG. 6B.

If a specific menu search request signal is not input at step S270, the controller 140 determines whether a specific item selection signal is input, in step S290. If a specific item selection signal is input, the process continues at step S260 and the controller 140 selects a specific item, and performs the corresponding function in response to input of an execution signal. It is preferable that the specific item selection signal is a 'down arrow key' input signal and the execution signal is a 'confirmation key' input signal. Specifically, if a specific item is selected in response to the 'down arrow key' input signal, the controller 140 executes the selected item in response to the 'confirmation key' input signal.

For example, as shown in FIGS. 7c and 8c, if the numeric key '2' is input after '225' is input, the controller 140 controls the search unit 130 to search for menus having characters 'A', 'B' and 'C' combined as a next character with the character row 'CAL', and to search for basic information and edition information, thereby finding 'no information' corresponding to an abbreviated number '2252' and a menu 'CALCULATOR' beginning with a character row 'CALC', then to display them in a list format, as shown in FIG. 7d. As shown in FIG. 7e, when the 'CALCULATOR' item is selected in response to a 'down arrow key' input signal in order to use a 'CALCULATOR' function, the controller 140 performs the 'CALCULATOR' function in response to an input of an execution signal, as shown in FIG. 7f.

FIGS. 6A and 6B are flowcharts illustrating, in detail, processes of the integration search method shown in FIG. 5.

FIG. 6Aa is a flowchart illustrating a process of performing an integration search with the numeral or character shown in FIG. 5, and FIG. 6b is a flowchart illustrating a process of performing a specific menu search with the numeral or character shown in FIG. 5.

Referring to FIG. 6A, the controller 140 controls the search unit 130 to search for edition information including the combination of characters allocated to input keys stored in the storage unit 120, in step S241.

The controller 140 determines whether corresponding edition information exists, in step S243. If corresponding edition information exists, the controller 140 displays the corresponding edition information, in step S245. If at least one corresponding edition information exists, the controller 140 controls the display unit 150 to display the corresponding edition information in a list format. The controller 140 divides and sorts the found corresponding edition information according to the menu. English alphabet edition information may be sorted in an alphabetic order and Korean alphabet edition information may be sorted in a consonant order.

For example, as shown in FIG. 8d, the controller 140 controls the display unit 150 to display the search result. Specifically, in a preset area of an upper part of a screen, a phone number having a name including the row of characters allocated to the input keys is displayed, and in a lower part of a screen, a file having a name including the row of characters allocate to the input keys is displayed. If a file name including the character row does not exist, a next file among the sorted files is displayed.

If corresponding edition information does not exist at step S243, the controller 140 controls the display unit 150 to notify the user of the non-existence of corresponding edition information, in step S247. The display unit 150 preferably displays through a pop-up window that the corresponding edition information does not exist. For example, as shown in FIG. 8g, the controller 140 controls the display unit 150 to display the search result on the pop-up window.

Referring to FIG. 6B, the controller 140 controls the search unit 130 to select a specific menu according to user input and search for edition information corresponding to the selected specific menu among edition information including the combination of characters allocated to the input keys stored in the storage unit 120, in step S281.

The controller 140 determines whether corresponding edition information exists, in step S283. If corresponding edition information exists, the controller 140 controls the display unit 150 to display the corresponding edition information, in step S285. If at least one corresponding edition information exists, the controller 140 controls the display unit 150 to display the corresponding edition information in a list format. The controller 140 divides and sorts the found corresponding edition information according to the menu. English alphabet edition information may be sorted in an alphabetic order and Korean alphabet edition information may be sorted in a consonant order.

For example, as shown in FIG. 8e, the selected specific menu may be a phone book. The phone number management database 20 is searched to display a name stored in the phone book.

In another example, as shown in FIG. 8f, the selected specific menu may be a file. In the file management database 40 shown in FIG. 3b, the file kind is searched. The file management database 40 includes an identification number 41 field, name 43 field, and size 45 field. For example, in the file management database 40, mapping information 47 whose identification number 41 is '1', name 43 is 'Calling.jpg', and size 45 is '17k' is stored.

If corresponding edition information does not exist at step S283, the controller 140 controls the display unit 150 to notify the user of the non-existence of corresponding edition information, in step S287. As shown in FIG. 8g, the display unit 150 preferably displays through a pop-up window that the corresponding edition information does not exist.

As described above, according to the present invention, a user can easily search for or execute desired information on a screen by performing an integration search by inputting a numeric key in a standby state of a mobile communication terminal.

For example, when the user wants to use a 'CALCULATOR' function, if the user inputs a numeric key '2' to which characters 'A', 'B' and 'C' are allocated on a screen of a mobile terminal in a standby state, the numeric key '2' to which characters 'A', 'B' and 'C' are allocated, and a numeric key '5' to which characters 'J', 'K' and 'L' are allocated, a menu beginning with a character row 'CAL' or including the character row 'CAL' is found and displayed in a list format on the screen. The user can perform the 'CALCULATOR' function by moving a curser to the corresponding menu using a direction key.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. An integration search device of a mobile communication terminal, comprising:
an input unit having a plurality of keys to which characters and numerals are allocated;
a storage unit for storing character and numeral mapping information corresponding to the keys, basic information, and edition information;
a search unit for searching for a character and numeral allocated to an input key in response to an input of one of the keys and searching for previously stored basic information and edition information corresponding to a found character and numeral;
a controller for sorting a search result; and
a display unit for displaying the sorted search result in a list format.

2. The integration search device of claim 1, wherein the search unit searches for an abbreviated number of a phone number stored in a phone book among the edition information.

3. The integration search device of claim 1, wherein the search unit searches for a menu in which at least one character allocated to the input key is included in a menu name.

4. The integration search device of claim 1, wherein the character is an English alphabet character.

5. The integration search device of claim 1, wherein the character is a Korean alphabet character.

6. The integration search device of claim 1, wherein the input unit selects a specific item in response to a specific item selection signal.

7. The integration search device of claim 6, wherein the specific item selection signal is a 'down arrow key' input signal.

8. The integration search device of claim 1, wherein the search unit searches for previously stored edition information including a sequential combination of at least one character, each character being allocated to an input key, in response to an integration search request signal.

9. The integration search device of claim 8, wherein the integration search request signal is a 'confirmation key' input signal.

10. The integration search device of claim 8, wherein the edition information comprises at least one of an image file, a transmission or a reception character message, a voice message, a phone book, a memo, an E-mail, schedule information, an audio file, and a video file.

11. The integration search device of claim 8, wherein the controller divides and sorts found edition information according to a menu.

12. The integration search device of claim 1, wherein the search unit searches for edition information corresponding to a previously stored specific menu including a sequential combination of at least one character, each character being allocate to an input key, in response to a specific menu search request signal.

13. The integration search device of claim 12, wherein the specific menu search request signal is a direction key input signal to which a specific search menu is mapped.

14. The integration search device of claim 12, wherein the specific menu comprises at least one of an image file, a transmission or a reception character message, a voice message, a phone book, a memo, an E-mail, schedule information, an audio file, and video file.

15. A method of performing an integration search in a mobile communication terminal having a plurality of keys to which characters and numerals are mapped, comprising:
searching for a character and numeral allocated to an input key in response to an input of one of the keys;
displaying the character and numeral allocated to the key according to a search result;
searching for previously stored basic information and edition information corresponding to the displayed character and numeral; and
displaying the previously stored basic information and edition information.

16. The method of claim 15, wherein searching for previously stored basic information and edition information corresponding to the displayed character and numeral comprises searching for an abbreviated number of a phone number stored in a phone book among the edition information.

17. The method of claim 15, wherein searching for previously stored basic information and edition information corresponding to the displayed character and numeral comprises searching for a menu in which at least one character allocated to the input key is included in a menu name.

18. The method of claim 15, wherein the character is an English alphabet character.

19. The method of claim 15, wherein the character is a Korean alphabet character.

20. The method of claim 15, further comprising selecting an item according to a specific item selection signal and executing the selected item according to an input of an execution signal.

21. The method of claim 20, wherein the specific item selection signal is a 'down arrow key' input signal.

22. The method of claim 20, wherein the execution signal is a 'confirmation key' input signal.

23. The method of claim 15, further comprising searching for and displaying previously stored edition information including a sequential combination of at least one, each character being allocated to an input key, according to an integration search request signal.

24. The method of claim 23, wherein the integration search request signal is a 'confirmation key' input signal.

25. The method of claim 23, wherein the edition information comprises at least one of an image file, a transmission or a reception character message, a voice message, a phone book, a memo, an E-mail, schedule information, a audio file, and a video file.

26. The method of claim 23, wherein searching for and displaying previously stored edition information including a sequential combination of at least one character comprises dividing and sorting found edition information according to the menu.

27. The method of claim 15, further comprising searching for and displaying edition information corresponding to a previously stored specific menu including a sequential combination of at least one character, each character being allocated to an input key, according to a specific menu search request signal.

28. The method of claim 27, wherein the specific menu search request signal is a direction key input signal to which a specific search menu is mapped.

29. The method of claim 27, wherein the specific menu comprises at least one of an image file, a transmission or a reception character message, a voice message, a phone book, a memo, an E-mail, schedule information, an audio file, and video file.
